# EUROPEAN PATENT APPLICATION

(11) **EP 0 737 828 A1**
(43) Date of publication of application: **16.10.1996**
(21) Application number: 96302407.0
(22) Date of filing: 03.04.1996
(51) Int. Cl.: F16H 63/44, F16H 37/04

(54) **Vehicular transmission**

(30) Priority: 12.04.1995 US 422236
(71) Applicant: EATON CORPORATION, Cleveland Ohio 44114 (US)
(72) Inventor: Braun, Eugene Ralph, Royal Oak, Michigan 48073 (US)
(74) Representative: Clarke, Geoffrey Howard

(57) **Abstract**

A compound transmission (200) comprising a splitter-type input section (202), a multiple-speed mainsection (12A) and a range-type output section (204) and controlled by a shift lever (234) and a manually operated splitter selector button (230) is provided.

## Description

### BACKGROUND OF THE INVENTION

### Field of the Invention

The present invention relates to a compound vehicular transmission system and, in particular, to a compound vehicular mechanical transmission comprising an input splitter section connected in series with a main transmission section connected in series with a 2-speed output range section and to manual shift controls therefor. Still more particularly, the present invention relates to a compound transmission of the type described with manual shift controls including a shift bar housing assembly for selecting mainsection gear ratios, at least one of said mainsection ratios selectable in two different shift bar housing assembly positions, and a control device or switch for sensing positioning of the shift bar housing assembly in said two positions and for automatically shifting the 2-speed range section accordingly.

### Description of the Prior Art

Compound transmission systems comprising manually shifted multispeed main transmission sections connected in series with one or more multispeed auxiliary drivetrain sections, usually of the range, splitter or combined range/splitter type are well known in the prior art. The auxiliary sections are usually input and/or output auxiliary transmission sections but may also be multispeed drive axles, transfer cases or the like. Examples of such compound transmission systems may be seen by reference to U.S. Patents No. 3,648,546; 3,799,002; 4,455,883; 4,527,447 and 4,754,665, the disclosures of which are incorporated herein by reference.

Control devices or assemblies for controlling the shifting of both the main transmission and the auxiliary drive train unit by requiring the vehicle operator to manipulate only a shift lever along an extended H-type shift pattern are also known in the prior art, as may be seen by reference to U.S. Patents No. 3,429,202; 4,455,883; 4,561,325 and 4,633,725, the disclosures of which are incorporated herein by reference.

These transmissions, while well received and widely utilized in manually shifted heavy duty vehicles, are not totally satisfactory as a pair of switches, in addition to the shift lever, must be manually manipulated or the double-H control therefor requires extensive transverse shift lever movement.

The drawbacks of the prior art were overcome or minimized by the provision of a 10-speed compound transmission comprising a multiple-speed main transmission section connected in series with a multiple-speed auxiliary section, preferably including at least 2-speed range gearing, one of which range ratios is utilized with only two ratios controlled by the same shift fork in the mainsection shift bar housing assembly. The shift control for the transmission includes a shift bar housing actuated by a standard shift lever or cross-shaft shift finger and defines two distinct positions for moving the shift bar and shift fork associated with the main section ratio or ratios compounded by the 2-speed auxiliary range ratio. Movement of the shift finger-actuated shift bar housing between the two distinct positions associated with movement of the one shift fork is sensed internally of the shift bar housing to actuate devices mounted at the transmission for shifting of the auxiliary 2-speed range section.

Transmissions of this type are very commercially successful, are sold by the assignee of this invention, EATON CORPORATION, under the "Super-10" trademark, and are illustrated in U.S. Patents No. 4,754,665; 4,974,468 and 4,944,197, the disclosures of which are incorporated herein by reference.

While these transmissions are significant improvements over the prior art, they are subject to improvement in the areas of simplified auxiliary section bearings and enhanced shift smoothness.

### SUMMARY OF THE INVENTION

In accordance with the present invention, the design and control of transmissions of the type illustrated in aforementioned U.S. Patents No. 4,944,197 and 4,974,468 is enhanced by providing a transmission system having the same number of ratios, the same number of gear layers, and the same highly desirable shift pattern, while providing further enhanced shift smoothness and/or a more economical auxiliary section structure with a simplified bearing structure.

The foregoing is accomplished by utilizing a 2-speed input splitter section and a 2-speed output range section in place of the 3-gear-layer combined splitter and range auxiliary output section utilized in the prior art. As in the prior art transmissions, the splitter is actuated by a manual selector while the range is actuated by a sensor for sensing the positioning of the mainsection shifting mechanism.

Accordingly, it is an object of the present invention to provide a new and improved compound vehicular transmission system. This and other objects and advantages of the present invention will become apparent from a reading of the detailed description of the preferred embodiment taken in connection with the attached drawings.

### BRIEF DESCRIPTION OF THE DRAWINGS

Figure 1 is a schematic illustration of a prior art transmission.
Figure 1A is a partial sectional view of the output auxiliary section of the prior art transmission of Figure 1.
Figure 2 is a schematic illustration of the transmission of the present invention.
Figure 2A is a partial sectional view of the output range section of the transmission of Figure 2.
Figure 3 is a schematic illustration of the shift pattern and typical ratio steps for the transmissions of Figures 1 and 2;
Figure 4 is a top view of the transmission of the present invention;
Figure 5 is a top view of the shift bar housing assembly of the transmission of Figure 2;
Figure 6 is a elevational view taken along line 6-6 of Figure 5;
Figures 7,8 and 9 are partial sectional views taken along line 7-7 in Figure 5 showing selectable operational positions of the shift bar housing assembly;
Figures 10 and 11 respectively, are partial sectional views taken along line 10-10 of Figure 5 corresponding to the shift bar housing positions illustrated in Figures 7 and 8, respectively; and
Figure 12 is a partial sectional view of a typical spring-biased plunger assembly.

### DESCRIPTION OF THE PREFERRED EMBODIMENT

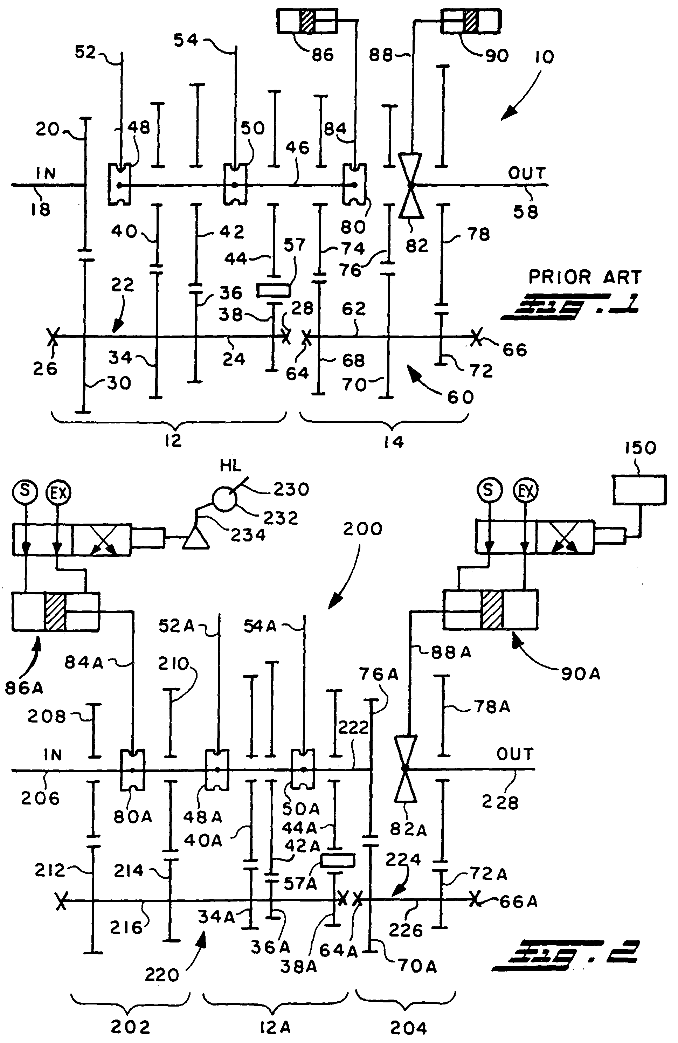

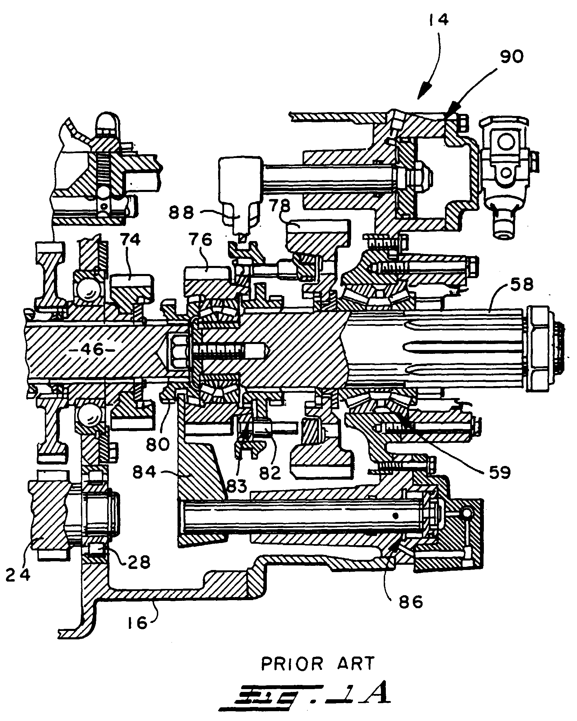

Certain terminology will be used in the following description for convenience only and will not be limiting. The words "upwardly," "downwardly," "rightwardly" and "leftwardly" will designate directions in the drawings to which reference is made. The words "forward" and "rearward" will refer respectively to the front and rear ends of the transmission as conventionally mounted in the vehicle, being respectively to the left and right sides of the transmission, as illustrated in Figure 1. The words "inwardly" and "outwardly" will refer to directions toward and away from, respectively, the geometric center of the device and designated parts thereof. Said terminology includes the words above specifically mentioned, derivatives thereof and words of similar import.

The term "compound transmission" is used to designate a change-speed or change-gear transmission having a main transmission section and an auxiliary drive train unit, such as an auxiliary transmission section, connected in series whereby the selected gear reduction in the main transmission section may be compounded by further selected gear reduction in the auxiliary transmission section.

Referring now to Figures 1 and 1A, a prior art compound transmission 10 is illustrated. Transmission 10 is a 10-speed transmission of the type illustrated in aforementioned U.S. Patents No. 4,944,197; 4,974,468 and 4,754,665. Transmission 10 comprises a main transmission section 12 connected in series with an auxiliary transmission section 14 having both range and splitter-type gearing. Typically, transmission 10 is housed within a single multipiece housing and includes an input shaft 18 driven by a prime mover such as a diesel engine (not shown) through a selectively disengaged, normally engaged, friction master clutch (not shown).

In the main transmission section 12, the input shaft 18 carries an input gear 20 for driving at least one countershaft assembly 22. Preferably, as is well known in the prior art and as is illustrated in U.S. Patents No. 3,105,395 and 3,335,616, the disclosures of which are incorporated herein by reference, input gear 20 simultaneously drives a plurality of substantially identical mainsection countershaft assemblies at substantially identical rotational speeds. Each of the mainsection countershaft assemblies comprises a mainsection countershaft 24 supported by bearings 26 and 28 in housing 16 and is provided with mainsection countershaft gears 30, 34, 36 and 38 fixed thereto. A plurality of mainsection drive or mainshaft gears 40, 42 and 44 surround the transmission mainshaft 46 and are selectively clutchable, one at a time, to the mainshaft 46 for rotation therewith by sliding clutch collars 48 and 50 as is well known in the art. Clutch collar 48 also may be utilized to clutch input gear 20 to the mainshaft 46 to provide a direct drive relationship between the input shaft 18 and the mainshaft 46. Preferably, each of the mainsection mainshaft gears encircles the mainshaft 46 and is in continuous meshing engagement with and is floatingly supported by the associated countershaft gear groups, which mounting means and special advantages resulting therefrom are explained in greater detail in aforementioned U.S. Patents No. 3,105,395 and 3,335,616. Typically, clutch collars 48 and 50 are axially positioned by means of shift forks or yokes 52 and 54, respectively, associated with a shift bar housing assembly to be described in greater detail below. In the preferred embodiment, clutch collars 48 and 50 are of the well-known, non-synchronized, double-acting jaw-clutch type.

Main section mainshaft gear 44 is the reverse gear and is in continuous meshing engagement with countershaft gears 38 by means of conventional intermediate idler gears 57. Jaw clutches 48 and 50 are 3-position clutches in that they may be positioned in a centered axially non-displaced, non-engaged position (as illustrated) or in a fully rightwardly engaged or fully leftwardly engaged position.

Auxiliary transmission section 14 is connected in series with main transmission section 12 and is of the 3-layer, 4-speed combined splitter/range type as illustrated in above-mentioned U.S. Patent No. 4,754,665. Mainshaft 46 extends into the auxiliary section 14 and is journalled in the inward end of the output shaft 58, which extends from the rearward end of the transmission.

Auxiliary transmission section 14 includes a plurality of substantially identical auxiliary countershaft assemblies 60, each comprising an auxiliary countershaft 62 supported by bearings 64 and 66 in housing 16 and carrying three auxiliary section countershaft gears 68, 70 and 72 fixed for rotation therewith. Auxiliary countershaft gears 68 are constantly meshed with and support auxiliary section splitter gear 74. Auxiliary countershaft gears 70 are constantly meshed with and support auxiliary section splitter/range gear 76, which surrounds the output shaft 58 at the end thereof adjacent the coaxial inner end of mainshaft 46. Auxiliary section countershaft gears 72 constantly mesh with and support auxiliary section range gear 78, which surrounds the output shaft 58. Accordingly, auxiliary section countershaft gears 68 and splitter gear 74 define a first gear layer, auxiliary section countershaft gears 70 and splitter/range gear 76 define a second gear layer, and auxiliary section countershaft gears 72 and range gear 78 define a third layer, or gear group, of the combined splitter-and-range-type auxiliary transmission section 14.

A sliding 2-position jaw clutch collar 80 is utilized to selectively couple either the splitter gear 74 or the splitter/range gear 76 to the mainshaft 46, while a 2-position synchronized clutch assembly 82 is utilized to selectively couple the splitter/range gear 76 or the range gear 78 to the output shaft 58. The structure and function of double-acting jaw clutch collar 80 is substantially identical to the structure and function of the sliding clutch collars 48 and 50 utilized in the main transmission section 12, and the function of double-acting synchronized clutch assembly 82 is substantially identical to the structure and function of the prior art double-acting synchronized clutch assembly, examples of which may be seen by reference to U.S. Patents No. 4,462,489; 4,125,179 and 2,667,955, the disclosures of which are incorporated herein by reference. The synchronized clutch assembly 82 illustrated is of the pin-type described in above-mentioned U.S. Patent No. 4,462,489.

The splitter jaw clutch 80 is a 2-position clutch assembly which may be selectively positioned in the rightwardmost or leftwardmost positions for engaging either gear 76 or gear 74, respectively, to the mainshaft 46. Splitter jaw clutch 80 is axially positioned by means of a shift fork 84 controlled by a 2-position piston actuator 86 which is operable by a driver selection switch (such as a button or the like) on the shift knob, as is known in the prior art. Two-position synchronized clutch assembly 82 is also a 2-position clutch which may be selectively positioned in either the rightwardmost or leftwardmost positions thereof for selectively clutching either gear 78 or 76, respectively, to output shaft 58. Clutch assembly 82 is positioned by means of a shift fork 88 operated by means of a 2-position piston device 90, the actuation and control of which will be described in greater detail below.

By selectively axially positioning both the splitter clutch 80 and the range clutch 82 in the forward and rearward axial positions thereof, four distinct ratios of mainshaft rotation to output shaft rotation may be provided. Accordingly, auxiliary transmission section 14 is a 3-layer auxiliary section of the combined range and splitter type providing four selectable speeds or drive ratios between the input (mainshaft 46) and output (output shaft 58) thereof. The mainsection 12 provides a reverse and three potentially selectable forward speeds. However, one of the selectable mainsection forward gear ratios, the low speed gear ratios associated with mainshaft gear 42, is not utilized in the high range. Thus, transmission 10 is properly designated as a "(2+1) × (2×2)" type transmission providing nine or ten selectable forward speeds, depending upon the desirability and practicality of splitting the low gear ratio.

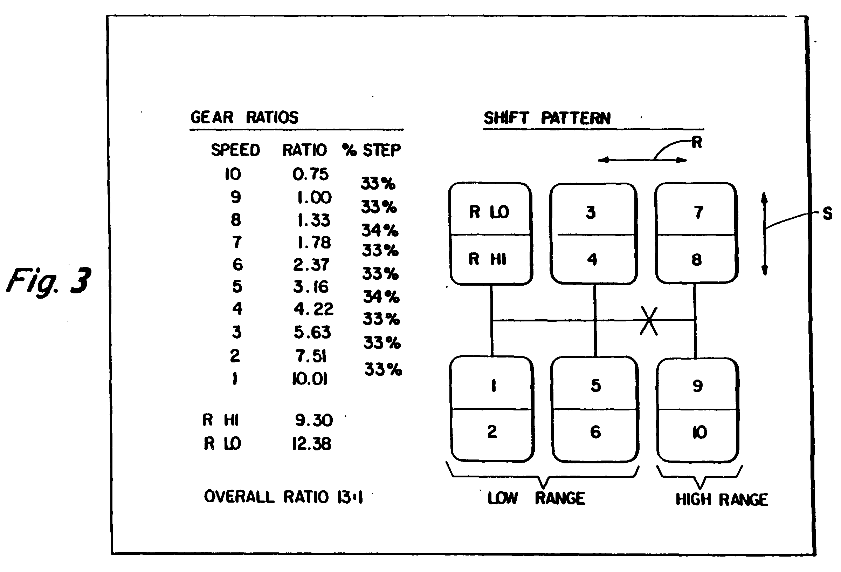

While clutch 82, the range clutch, should be a synchronized clutch, double-acting clutch collar 80, the splitter clutch, is not required to be synchronized. The shift pattern for shifting transmission 10 is schematically illustrated in Figure 3. Divisions in the vertical direction at each gear lever position signify splitter shifts, while movement in the horizontal direction from the 3/4 and 5/6 leg of the H pattern to the 7/8 and 9/10 leg of the H pattern signifies a shift from the low range to the high range of the transmission. As discussed above, splitter shifting is accomplished in the usual manner by means of a vehicle operator-actuated splitter button or the like, usually a button located at the shift lever knob, while operation of the range clutch shifting assembly is an automatic response to movement of the gear shift lever between the central and rightwardmost legs of the shift pattern (as illustrated in Figure 3 and which will be described in greater detail below). Range shift devices of this general type are known in the prior art and may be seen by reference to aforementioned U.S. Patents No. 3,429,202; 4,455,883; 4,561,325 and 4,633,725.

Referring again to Figure 3, and assuming that it is desirable that a transmission have generally equal ratio steps, the mainsection ratio steps should be generally equal, the splitter step should be generally equal to the square root of the mainsection ratio steps, and the range step should equal about the mainsection ratio step raised to the N power where N equals the number of mainsection ratio steps occurring in both ranges (*i.e.,* N = 2 in the (2 + 1) × (2 × 2) transmission 10). Given the desired ideal ratios, gearing to approximate these ratios is selected. In the above example, the splitter steps are about 33.3%, while the range step is about 316%, which is generally suitable for a " 2 + 1 " main transmission section having about 78% steps, as the square root of 1.78 equals about 1.33 and 1.78 raised to the second power (*i.e.,* N = 2) equals about 3.16.

To achieve high-capacity, relatively quiet operation, the splitter and range gearing preferably is helical. Referring to Figure 1A, it may be seen that a pair of opposed tapered bearings is utilized to provide a bearing assembly 83 associated with supporting the splitter/range gear, and that said assembly 83 is in addition to bearing assembly 59 associated with supporting output shaft 58 and requires special attention to assure proper lubrication thereof.

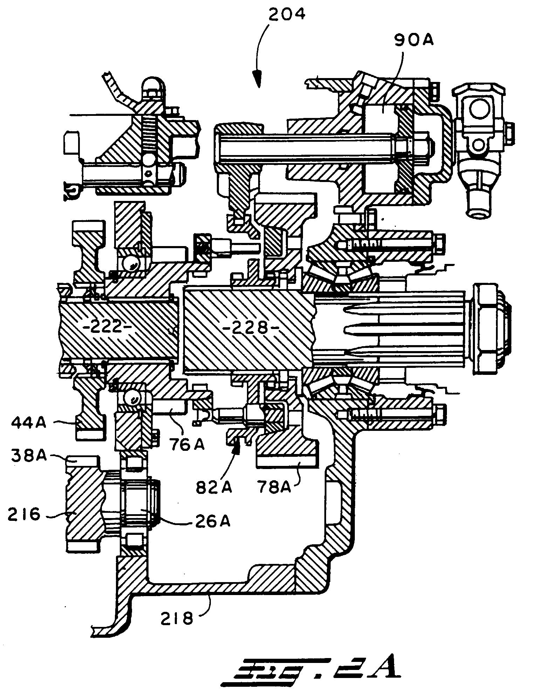

The 10-speed transmission 200 of the present invention is illustrated in Figures 2 and 2A. Elements of transmission 200 which are substantially structurally and functionally idential to elements of transmission 10 are assigned a like reference numeral with an "A" appended thereto.

Transmission 200 comprises a 2-speed input splitter section 202 connected in series wth a "2 + 1" mainsection 12A, which is connected in series with a 2-speed output range section 204. Transmissions having an input splitter section and an output range section may be seen by reference to U.S. Patents No. 5,370,013 and 5,385,066, the disclosures of which are incorporated herein by reference.

Transmission 200 includes an input shaft 206 which extends into the input section 202 and carries a splitter clutch 80A for clutching either input gear 208 or input gear 210 to the input shaft 206. The input gears 208 and 210, respectively, are constantly meshed with countershaft gears 212 and 214, respectively, carried by countershaft 216.

Countershaft 216 also carries countershaft gears 34A, 36A and 38A fixed for rotation therewith and is supported in housing 218 by bearings 26A and 28A. Countershaft 216 and the gears carried thereby define a forward countershaft assembly 220. Preferably, as with transmission 10 described above, transmission 200 will have a plurality of substantially identical forward countershaft assemblies.

A plurality of mainsection gears 40A, 42A and 44A surround the transmission mainshaft 222 and are selectively clutchable thereto, one at a time, by jaw clutches 48A and 50A. Clutch 48A (in cooperation with clutch 80A) also may be utilized to clutch the input shaft 206 directly to the mainshaft 222.

Mainshaft gear 44A is the reverse ratio gear and is constantly meshed with idler gear 57A, which also is constantly meshed with countershaft gear 38A. Jaw clutches 48A and 50A are 3-position clutches which may be centered in a neutral or non-engaged position (as shown) or may be displaced forward or rearwardly into an engaged position by means of shift forks 52A and 54A associated with a mainsection shift bar housing assembly.

Output range section 204 includes one or more rear countershaft assemblies 224, each comprising a rear countershaft 226 supported by bearings 64A and 66A in housing 218. Mainshaft 222 extends into the range section 204 and carries a range gear 76A fixed thereto, which is constantly meshed with rear countershaft gear 70A fixed to rear countershaft 226. Rear countershaft 226 also carries fixed thereto a rear countershaft gear 72A, which is constantly meshed with output gear 78A, which surrounds the output shaft 228. Output shaft 228 carries a 2-position, double-sided, synchronized clutch 82A fixed thereto for selectively clutching either gear 76A/mainshaft 222 or output gear 78A thereto.

As with transmission 10, splitter clutch 80A is a 2-position clutch axially positioned by a shift fork 84A controlled by a 2-position actuator 86A operable in response to the operator's manipulation of a splitter button 230 or the like located on the knob 232 of shift lever 234. As with transmission 10, range clutch 82A is a 2-position clutch axially positioned by a shift fork 88A controlled by a 2-position actuator 90A in response to a sensor or the like associated with the mainsection shift bar housing assembly. Splitter clutch 80A may be of the synchronized or the non-synchronized type.

The shift pattern, and possible ratios, illustrated in Figure 3 are equally applicable to transmission 10 and transmission 200.

By utilizing a front splitter structure in transmission 200, the splitter bearing assembly 83 required for transmission 10 is eliminated and the ratio change of the splitter shifts is the same for all splitter shifts, which should simplify optimizing the smoothness of such shifts.

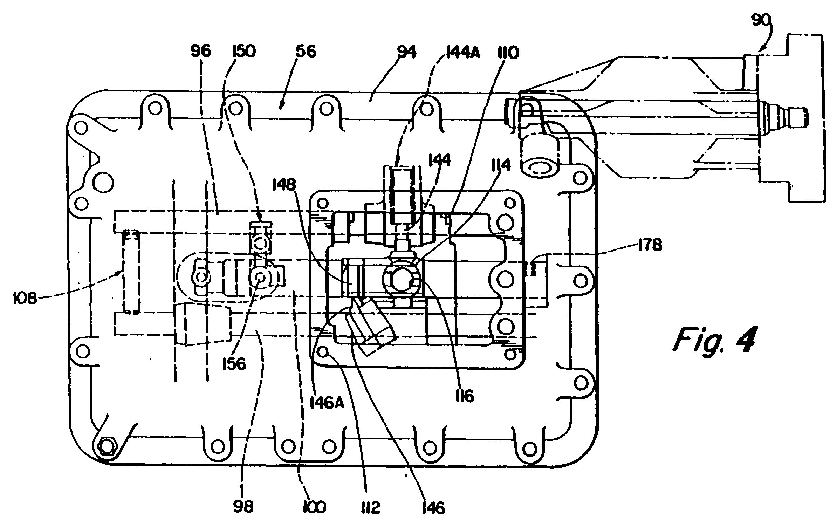

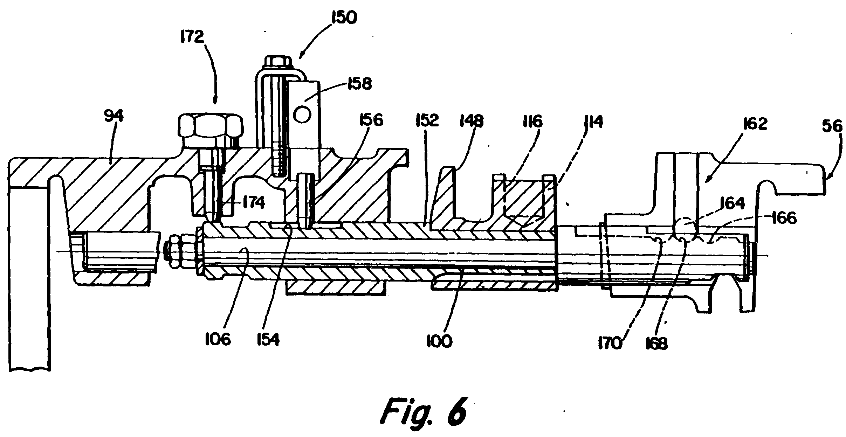

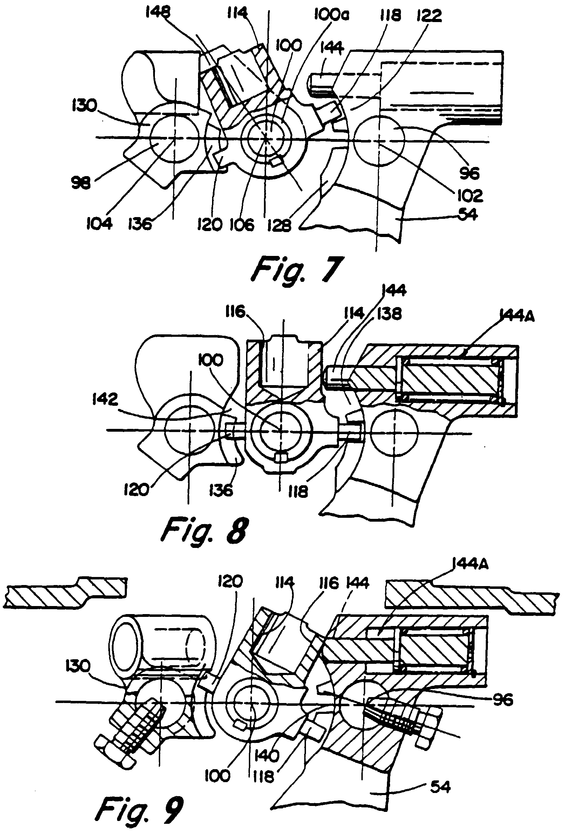

A shift control unit or assembly for controlling shifting of the main transmission sections 12 and 12A and the range portion clutch 82 or 82A of the auxiliary sections 14 and 204 is defined by the shift bar housing assembly 56. Referring to Figures 4-6, shift bar housing assembly 56 includes a housing 94 which is mountable to the upper opening provided in transmission housing 16 and which may carry the range clutch actuating piston assembly 96 thereto. Shift bar housing 94 supports a first shift bar (also called "shift bar" and/or "shift rail") 96 and a second shift bar 98 for independent axial movement therein. Shift bar 96 carries shift fork 54A for axial movement therewith, and shift bar 98 carries shift fork 52A for axial movement therewith. Shift bar housing 94 also supports a control shaft 100 for axial and rotational movement therein. Shift rails 96 and 98 and control shaft 100 are axially movable about axes 102, 104 and 106, respectively, which are substantially parallel. Alternatively to being axially rotatably movable in housing 94, shaft 100 may be fixed to the housing and support a sleeve 100A for axial and rotational movement thereabout as may be seen by reference to Figures 7-9.

The operation of shift bars 96, 98 is standard and consists of movement of shift bar 96 rightwardly and leftwardly, respectively, from the axially non-displaced, neutral position for engaging gears 40A and 210, respectively, to mainshaft 222, and movement of shift rod 98 righwardly and leftwardly, respectively, for engagement of gears 44A and 42A, respectively, to mainshaft 222. A standard interlock mechanism indicated generally at 108 is provided to prevent simultaneous movement of shift bars 96 and 98 from the neutral centered positions thereof to prevent engagement of more than one mainshaft gear at a time to the mainshaft 222. The shift bar housing 94 is provided with an opening 110 therein for receipt of a shift finger (not shown) carried by either a standard direct control shift lever 234 or cross-shaft of a remote-control mechanism, as is well known in the prior art. The housing 94 is provided with means, such as tapped apertures 112 adjacent the opening 110, allowing mounting of a standard shift lever shift tower or remote control mechanism. Control shaft 100 carries a bushing member 114 fixed for rotational and axial movement therewith. Bushing 114 defines a generally upwardly facing socket 116 for receipt of the lower end of a shift finger to define a ball-and-socket-type joint therewith. Accordingly, it may be seen that the shift bar housing assembly 56 is equally well suited for both direct and remote-control-type shifting of transmissions 10 or 200.

Fixed for axial and rotational movement with control shaft 100 is a pair of shift tab elements 118 and 120 located generally diametrically opposite one another and here shown as integral with bushing member 114. Shift bar 96 carries fixed for axial movement therewith a block member 22 having a generally circumferentially extending slot 124 therein defined by opposed strike or engagement surfaces 126 and 128 for selective cooperation with the shifting tab member 118. As may be seen, a non-displaced positions of control shaft 100 and shift bar 96, tab 118 will align with and be rotatable through groove 124. Similarly, shift bar 98 carries a shift block member 130 having a generally circumferentially extending groove 132 defined by two oppositely facing strike surfaces 134 and 136 for selective cooperation with the shift tab member 120.

Block member 122 defines a first axial groove 138 and a second axial groove 140 extending axially therethrough and interrupting both of the strike surfaces 126 and 128 defined thereby. Shift block member 130 defines an axially extending guide surface or groove 142 and interrupting both strike surfaces 134 and 136 defined thereby.

Referring to all of the figures, and to Figures 7-9 in particular, the operation of shift bar housing assembly 56 will be described in greater detail. For selection of either reverse low, reverse high, first or second speed operation of transmission 200, the control shaft 100 is rotated to its most clockwise position as seen in Figure 9. In this position, the bushing 116 will contact the shift block member 122 to limit further clockwise rotation, as is known in the prior art. A spring-biased plunger member 144 is provided to give the operator an indication of having selected the reverse and low speed rail position, the most leftward leg of the shift pattern as seen in Figure 3, and to resiliently urge the transmission out of this position upon release by the operator. In the position shown in Figure 9, the control shaft 100 may be moved axially rightwardly or leftwardly, respectively, causing the shift tab member 118 to engage strike surfaces 126 or 128, respectively, to cause engagement of gears 44A or 42A, respectively, to the mainshaft 222 for reverse or low speed operation (first/second speeds), respectively, of transmission 200. Axial movement of the control shaft 100 and the shift bar 96 therewith will be guided by the opposite shift tab member 120 interaction with the guide surface 142 defined by the shift block member 130 carried by the other shift bar 98.

To select engagement of gears 40A or 210 to the mainshaft 46 for operation in the third, fourth, fifth or sixth speed positions of transmission 200, the bushing 114 and control shaft 100 fixed for rotation therewith are positioned as shown in Figure 7. The spring-biased plunger assembly 146 and a finger member 148 fixed for rotation with the bushing 114, preferably integral therewith, is provided to assist the operator by providing a verification field that he has properly selected the position shown in Figure 8. Briefly, upon initial engagement of the plunger 146 by finger 148, the operator will be assured that the control shaft 100 is properly rotationally positioned for operation in the middle leg of the shift pattern illustrated in Figure 3. Having positioned the control shaft 100 and bushing 114 as illustrated in Figure 8, rightward and leftward axial movement, respectively, of the control shaft 100 will cause the shift tab 120 to engage strike surfaces 134 or 136, respectively, to engage either gear 40A or 210 to the mainshaft 222. It is noted that in the position illustrated in Figure 8, the opposite shift tab 118 is aligned with guide groove 140 defined in the shift block 122 to maintain the rotational position of control shaft 100 during axial displacement thereof.

To select high range operation of transmission 200 (*i.e.,* operation in the seventh, eighth, ninth or tenth speeds thereof), the control shaft 100 and bushing 114 are located in the counterclockwisemost position, as illustrated in Figure 7. In this position, finger 148 will completely depress the spring-biased plunger 146 and will bottom out thereon, giving the operator a positive indication of correct rotational positioning of the control shaft 100. Shift tab member 120 will be engageable with either strike surface 134 or 136 whereby rightward and leftward axial movement of control shaft 100 will result in engagement of gears 40A and 210 with mainshaft 222, as discussed above. It is noted that in the position illustrated in Figure 7, the tab member 118 will be guided by the groove 130 defined in the shift block member 122 to maintain the control shaft 100 in the correct rotational position thereof during axial displacements from the centered position thereof.

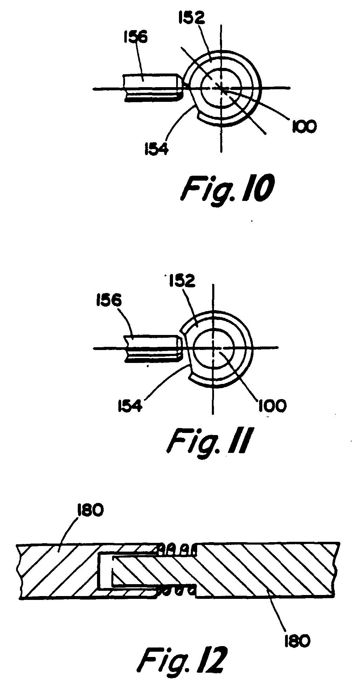

To accomplish a shifting of the range section of the transmission 200 to achieve high-range operation thereof, synchronized clutch assembly must be shifted to the leftwardmost position thereof as illustrated in Figure 2. To accomplish this without requiring the operator to actuate any control device other than the gear lever movements to the rightwardmost leg of the shift pattern as seen in Figure 3, the range control valve assembly 150 is provided which will be described in greater detail below. Briefly, the range control assembly includes a slotted sleeve member 152 fixed for rotation with shaft 100, which sleeve is provided with a groove 154 extending along only a limited circumferential portion thereof, as may be seen by reference to Figures 10 and 11. A spring-biased plunger member 156 connected to a master control valve 158 is axially aligned with the grooved portion 154 of sleeve 152 for all axial positions of shaft 100. Briefly, as may be seen by reference to Figure 10, when the control shaft 100 is rotated to the high-range position corresponding to Figure 7, the plunger 156 will be forced radially outwardly causing the master valve 158 to provide a signal to a slave valve 160 located at piston assembly 90A to shift the shift fork 88A leftwardly (as is shown), while positioning of the control shaft 100 in the low-range position corresponding with Figures 8 and 9 will cause the plunger 156 to extend further radially inwardly (as shown in Figure 11), causing the master valve 158 to signal the slave valve 160 to shift the shift fork rightwardly from the position shown in Figure 2 to achieve a low-range mode of operation.

The shift bar housing assembly 56 also is provided with a spring-biased detent assembly 162 comprising a spring-biased detent ball 164 biased inwardly to interact with grooves 166, 168 and 170 provided on the shift rails to maintain the transmission in the centered or axially displaced positions thereof and to provide a positive feel of having achieved a properly centered or displaced position. The shift bar housing assembly 56 also is provided with a neutral switch device 172 for sensing displacement of the control shaft 100 from the axially centered position thereof and for providing a neutral/not neutral control signal. Briefly, device 172 comprises a spring inwardly biased plunger 174, which will cooperate with ramps and grooves formed on the control shaft 100 to provide a signal indicative of axial displacement from the axially centered nondisplaced position of the control shaft 100.

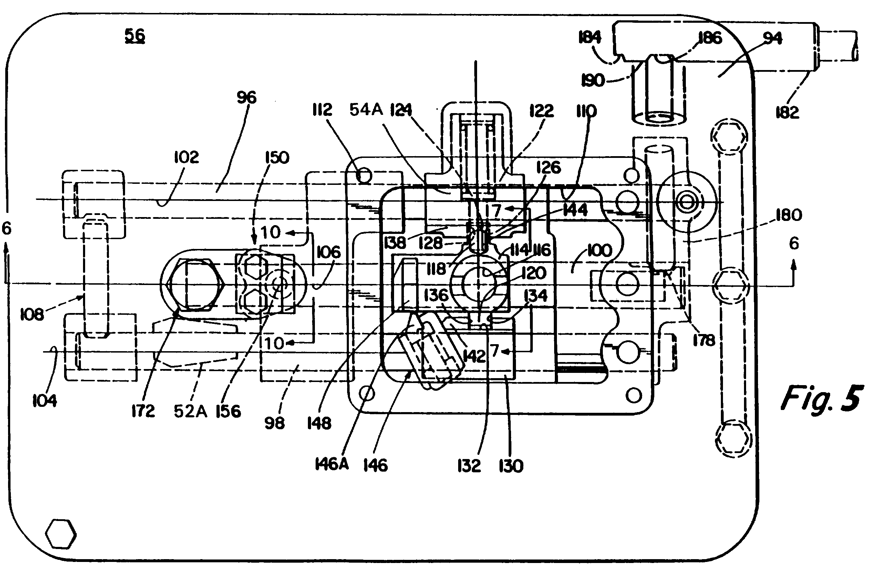

For proper operation of transmission 200, and specifically to prevent burn-up of the synchronizing clutches utilized in the double-acting range clutch assembly 82A, it is important that a change in the auxiliary section range ratio not be initiated until the main transmission section is in neutral and that the main transmission section remain in neutral until the newly selected auxiliary section range ratio is fully engaged. A change in the range section ratio cannot occur unless there is a rotational movement of the control shaft 100 between the positions illustrated in Figures 7 and 8, which will not occur unless both of the shift bars 96 and 98 and the control shaft 100 are in the axially centered position, as illustrated in Figure 5, wherein the shift tab members 118 and 120 are axially aligned with the circumferentially extending grooves 124 and 132 defined by the shift block members 122 and 130. A not neutral signal from device 172 also may be used to prevent initiation of a range shoft until the mainsection 12A is in neutral.

Accordingly, the shift bar housing 56 of the present invention, as is the case with prior art devices such as the device illustrated in above-mentioned U.S. Patent No. 4,561,325, will not initiate a change from high range to low range (or vice versa) until such time as the main transmission section is brought to neutral. However, it is also important to inhibit reengagement of the main transmission section until the range shift has been completed. To accomplish this, the control shaft 100 is provided with a ramped groove 178 for cooperation with a resiliently axially compressible plunger member 180, which will be biased radially inwardly toward shaft 100 by means of a range interlock cross shaft 182 provided with grooves 184 and 186, which will align with the pin 180 when the range clutch is either in the rightwardmost or leftwardmost position thereof, and is provided also with a land section 190 which will align with the pin 180 when the synchronized clutch assembly 82 is not fully engaged to bias the interlock pin 180 radially inwardly. Preferably, to provide an inhibit-rather than a prohibit-type interlock mechanism to allow shifting of the main transmission in emergency situations, the interlock pin member 180 will be resiliently compressible, as is seen in Figure 12, allowing the operator to overcome the range interlock mechanism. Preferably, cross shaft 182 is integral with the piston member carrying shift fork 88 or is axially fixed thereto.

As an alternative, it has been found that inhibiting/prohibiting mainsection engagement prior to reengagement of the range section is important only in an upshift from low range to high range of the range clutch 82A and, thus, only a range-shift interlock may be provided by modification of the land across shaft 182, as illustrated in the dotted line in Figure 5.

The present invention is also applicable to single shift shaft-type shift bar housings, as seen in U.S. Patent No. 4,920,815, the disclosure of which is incorporated herein by reference.

Accordingly, it may be seen that an improved compound transmission and shift control unit therefor has been provided.

The description of the preferred embodiment of the present invention is by way of example only and various modifications and/or rearrangement of the parts are contemplated without departing from the spirit and the scope of the invention as hereinafter claimed.

## Claims

1. A combined splitter- and range-type compound transmission (200) comprising a 2-speed, splitter-type input section (202) connected in series with a multiple-speed mainsection (12A) connected in series with a 2-speed, range-type output section (204), said input section comprising an input shaft (206) and a splitter clutch (80A) for selectively coupling one of two input gears (208, 210) to said input shaft, said output section comprising a range clutch (82A) for selectively engaging one of two gears (76A, 78A) to one of an output shaft or a mainshaft, said transmission characterized by:
a splitter actuator (86A) for shifting said splitter clutch, said splitter actuator responsive to manual operation of a splitter selector (230), and
a combined mainsection and output section control assembly independent of said splitter selector and said splitter actuator, said control assembly comprising a shift bar housing assembly (56) including at least two parallel shift rods (96, 98) axially movable therein from axially non-displaced to axially displaced positions to engage and disengage, one at a time, selected main transmission section ratios, each of said shift rods carrying a shift block member (122,130) having engagement faces (126, 1 28 and 134, 136) for selective engagement by a selector member (118, 120) to selectively axially move the shift rods, at least one of said shift block members (130) configured such that the selector member (118, 120) can engage the engagement faces thereof (134, 136) in two distinct adjacent operational positions (Figures 7 and 8) of said selector member, and cause axial movement of the carrying shift rod and switch means (150) activated by movement of said selector member between said first and second operational positions for causing shifting of said range clutch.

2. The transmission of claim 1 wherein said selector member is controlled by a manually manipulated shift lever (234) having a shift knob (232), said splitter selector associated with said shift knob.

3. The transmission of claim 1 wherein said splitter clutch and said range clutch are synchronized clutches.

4. The transmission of claim 1 wherein only one of said shift block members is configured to be selected in more than one position of said selector member.

5. A combined splitter- and range-type compound transmission comprising a 2-speed, splitter-type input section connected in series with a multiple-speed mainsection connected in series with a 2-speed, range-type output section, said input section comprising an input shaft and a splitter clutch for selectively coupling one of two input gears to said input shaft, said output section comprising a range clutch for selectively engaging one of two gears to one of an output shaft or a mainshaft, said transmission characterized by:
a splitter actuator for shifting said splitter clutch, said splitter actuator responsive to manual operation of a splitter selector, and
a combined mainsection and output section control assembly independent of said splitter selector and said splitter actuator, said control assembly comprising a shift bar housing assembly including at least two shift forks (52A, 54A) axially movable therein from axially non-displaced to axially displaced positions to engage and disengage, one at a time, selected main transmission section ratios, each of said shift forks associated with a shift block member having engagement faces for selective engagement by a selector member to selectively axially move the shift forks, at least one of said shift block members configured such that the selector member can engage the engagement faces thereof in two distinct adjacent operational positions of said selector member, and cause axial movement of the associated shift fork and switch means activated by movement of said selector member between said first and second operational positions for causing shifting of said range clutch.

6. The transmission of claim 5 wherein said selector member is controlled by a manually manipulated shift lever having a shift knob, said splitter selector associated with said shift knob.

7. The transmission of claim 5 wherein said splitter clutch and said range clutch are synchronized clutches.

8. The transmission of claim 5 wherein only one of said shift block members is configured to be selected in more than one position of said selector member.
